# EUROPEAN PATENT APPLICATION

(11) **EP 0 766 059 A2**
(43) Date of publication of application: **02.04.1997**
(21) Application number: 96306706.1
(22) Date of filing: 16.09.1996
(51) Int. Cl.: G01B 5/06

(54) **Height gauge**

(30) Priority: 28.09.1995 US 535442
(71) Applicant: EMHART INC., Newark, Delaware 19711 (US)
(72) Inventor: Segien, Donald J., Jr., Chatsworth, California 91311 (US)
(74) Representative: Stagg, Diana Christine

(57) **Abstract**

A height gauge 20 includes a body formed by a pair of legs 30 and 32 which are joined by a linking arm 34. A space or enclosure 36 is formed by the legs 30 and 32 and the arm 34 and a smaller space or enclosure 38 is formed in the arm and communicates with the space 36. A pair of first measuring surfaces 40 and 42 are located at a common end of legs 30 and 32, respectively. A second measuring surface is located within space 38 a prescribed distance from either the first measuring surfaces 40 and 42. The measuring surfaces 40 and 42 of the gauge 20 are positioned on a surface 26 of a counter 28 and the enclosure is positioned about a valve 24 and a nut 56. The nut 56 is threadedly adjusted to move a stem 22 of the valve 24 relative to the surface 26 to engage the second measuring surface 44 and thereby attain the desired distance between the top of the stem and the surface 26.

## Description

The present invention relates to a height gauge and, in particular, to a gauge which is used in the assembly of a first object with a second object to ensure that a selected portion of the first object is located a precise distance from a selected portion of the second object.

In the installation of some types of faucet assemblies, a valve is assembled at one end of a hollow end body such that a stem of the valve extends axially above the end body. The end body is formed with an external threaded section having a lower nut thereon. The assembled valve and end body are then manipulated to position the valve and the adjacent portion of the end body through a hole in a counter from the bottom thereof so that the valve extends above the counter. A top nut is placed over the valve and coupled to the portion of the threaded section of the end body which extends above the counter.

The installer must now locate the top of the stem a prescribed distance above the counter so that subsequently assembled components of the related faucet assembly, such as a handle mounted on the stem, will be precisely located in the final arrangement of the components. Typically, the installer has to juggle a ruler or measuring scale while positioning the stem to the prescribed height above the counter and then adjusting the top nut to sustain the stem in the prescribed height. This could be done by adjusting the top nut several times on a trial basis and measuring the height after each adjustment until the prescribed height is attained. This is, at best, a cumbersome, tedious and time consuming process.

Thus, there is a need for a device which will facilitate the prompt and efficient adjustment of the stem to the prescribed height uncomplicated manner.

It is an object of the present invention to provide a height gauge to assist in the assembly of a first object with a second object in an uncomplicated and timely manner.

It is a further object of the present invention to provide a height gauge which establishes the prescribed height at which a portion of a first object is to be located with respect to a portion of a second object upon assembly of the objects together.

The present invention provides a height gauge for establishing the desired distance for locating a selected portion of a first object with respect to a selected portion of a second object, characterised in that the gauge comprises a body; a first measuring surface located on the body at a prescribed location; a second measuring surface located on the body at a prescribed location spaced a prescribed distance from the first measuring surface; the first measuring surface being located on the body for engagement with the selected portion of the first object; the second measuring surface being positionable at a location which establishes the desired location of the selected portion of the second object when the first measuring surface is in engagement with the selected portion of the first object; and a portion of the body being shaped to allow close positioning of the gauge about sections of the first object or the second object for accurate distance adjustment of the first and second objects relative to each other.

Three embodiments of a height gauge according to the invention will now be described with reference to the accompanying drawings, in which:
Figure 1 is a front view showing a preferred embodiment of a height gauge according to the invention;
Figure 2 is a side view of the height gauge of Figure 1;
Figure 3 is a front view showing the height gauge of Figure 1 in use;
Figure 4 is a front view of a second embodiment of a height gauge according to the invention; and
Figure 5 is a front view of a third embodiment of a height gauge according to the invention.

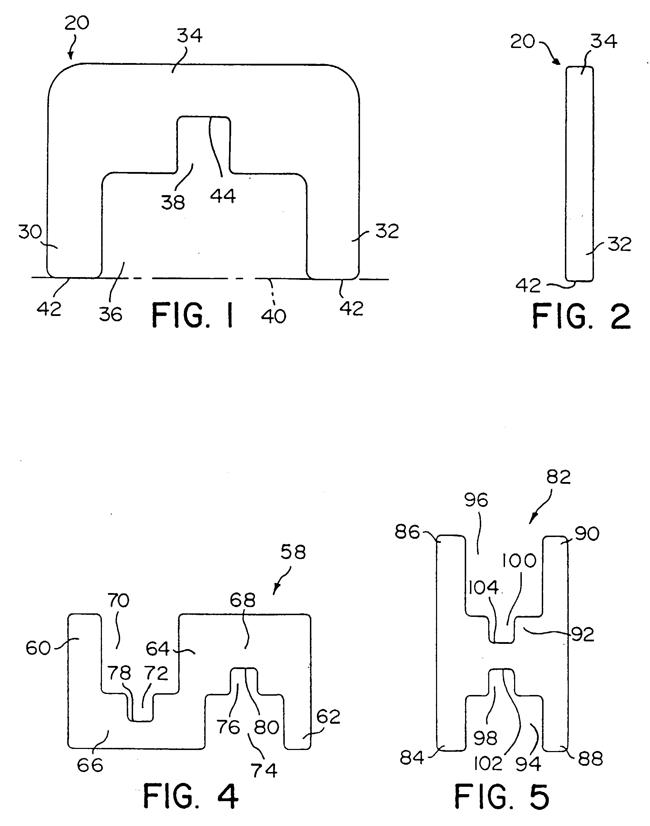

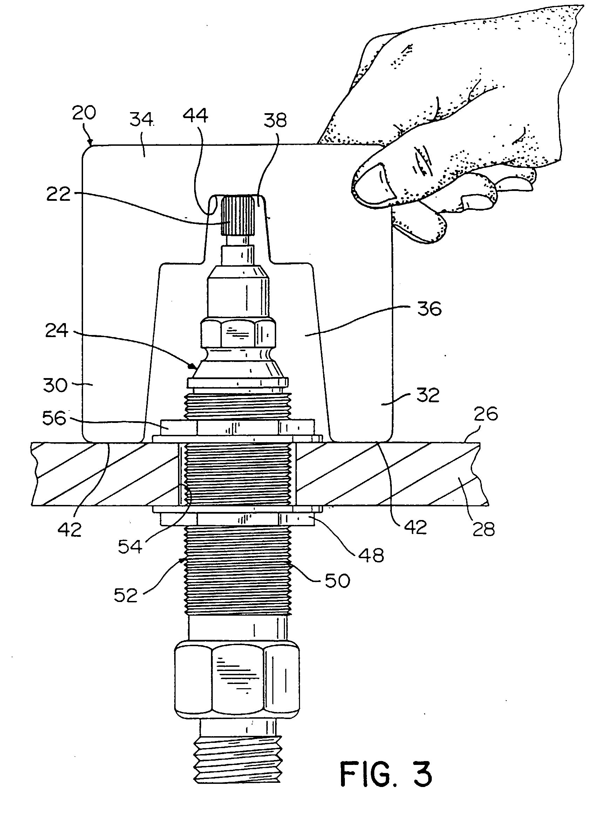

As shown in Figure 1, a height gauge 20, is formed from a thin but relatively rigid material such as, for example, cardboard having a relative thickness as shown in Figure 2. The gauge 20 is formed in an inverted "U" configuration as viewed in Figure 1. As shown in Figure 3, the height gauge 20 is used to locate precisely the top of an object such as a stem 22 of a water valve 24 a prescribed distance above a surface 26 of another object such as a counter 28.

Referring again to Figure 1, the gauge 20 comprises a body formed with spaced side legs 30 and 32 and a linking cross arm 34 to define a large space or enclosure 36 between the legs. A small space or enclosure 38 is formed in the bottom of the cross arm 34 and communicates with the large space 36.

The distance between a plane 40, coincidental with bottom surfaces 42 of the legs 30 and 32, and an upper wall 44 of the small space 38 represents the desired height of the top of the stem 22 from the surface 26 of the counter 28 as shown in Figure 3. Thus, surfaces 42 and surface 44 are measuring surfaces which establish the desired distance that a portion of the first object is to be located with respect to the second object.

As illustrated in Figure 3, a bottom nut 48 is placed on a threaded section 50 of a valve unit 52 which has the valve 24 mounted thereon. The valve 24 and the valve unit 52 are inserted through a hole 54 in the counter 28 from the bottom thereof. A top nut 56 is then positioned over the valve 24 from the top thereof and threadedly mounted on the threaded section 50 of the valve unit 52. The nuts 48 and 56 are adjusted allowing axial movement of the valve 24 and the valve unit 52 to move the top of the stem 22 to the desired height as determined by use of the gauge 20.

In use of the gauge 20, the measuring surfaces 42 are placed on the surface 26 of the counter 28 as illustrated in Figure 3. The large space or enclosure 36 is defined generally to fit about a portion of the object, that is the valve 24 and the nut 56, while the small space or enclosure 38 is defined to fit about another portion of the object, that is the stem 22. In combination, the spaces or enclosures 36 and 38 define an enclosure outline which follows generally the outline of the object to be adjusted and thereby allows positioning of the gauge 20 in a strategic location with relative ease. The measuring surfaces 42 of the gauge 20 are placed on the counter surface 26 and the nut 56 and threaded section 50 of the valve unit 52 are adjusted until the top of the stem 22 is in engagement with the measuring surface 44.

It is noted that the spaces or enclosures 36 and 38 could be defined to match the shape generally of objects having shapes other than the shape of the valve 24 and nut 56. In addition, a gauge could be formed, and used, in similar fashion to the gauge 20 by removing leg 32 and the adjacent portion of arm 34.

A second embodiment of a gauge according to the invention is illustrated in Figure 4 wherein a gauge 58 is designed generally in a sideways "S" configuration to assist in the assembly of either of two valve units 52 having valves 24 where the height of the respective stem 22 of each valve is of a different height from the other stem. The gauge 58 is composed from a thin but rigid material such as, for example, cardboard. The gauge 58 is formed with two, spaced side legs 60 and 62 and an intermediate leg 64 which is equally spaced between the side legs. As illustrated in Figure 4, the lower ends of legs 60 and 64 are joined by a linking cross arm 66 and the upper ends of the legs 62 and 64 are joined by a linking cross arm 68. A large space 70 is formed between the upper ends of the legs 60 and 64 which communicates with a small space 72 formed in an upper portion of the arm 66. A large space 74 is formed between the lower ends of the legs 62 and 64 which communicates with a small space 76 formed in a lower portion of the arm 68. The distance between a lower wall 78 of the small space 72, as viewed in Figure 4, and a plane which is coincidental with the top of leg 60 and arm 68 is greater than the distance between a top wall 80 of the small space 76, as viewed in Figure 4, and a plane coincidental with the bottom of leg 62 and the arm 66.

The gauge 58 is used in a manner similar to gauge 20 as described above, except that the gauge 58 can be used for gauging the heights of two separate valve stems 22, each being set at a height different from the other stem. This can be accomplished by using spaces 74 and 76 to gauge the height of a shorter stem location and then flipping the gauge over to use spaces 70 and 72 to gauge the height of a taller stem location.

Referring to Figure 5, a height gauge 82 represents a third embodiment of the invention. The gauge 82 is formed generally in an "H" configuration and is composed of a thin but rigid material such as, for example, cardboard. The gauge 82 is formed with a first lower leg 84 which is joined with a first upper leg 86 in a vertical alignment as shown in Figure 5. The gauge 82 is also formed with a second lower leg 88 which is joined with a second upper leg 90 in a vertical alignment as shown in Figure 5. The vertically aligned set of legs 84 and 86 is spaced from the vertically aligned set of legs 88 and 90 and they are joined by a linking arm 92 extending between intermediate portions of the sets of legs to form a large lower space 94 and a large upper space 96. A small space 98 is formed in a lower portion of the arm 92 and a small space 100 is formed in an upper portion of the arm 92. In use, the gauge 82 is positioned so that an upper wall 102 of the space 98, as viewed in Figure 5, is used in conjunction with the bottoms of the legs 84 and 88 to gauge the location of a short stem 22 in the manner described above. The gauge 82 is then flipped over and is positioned so that a lower wall 104 of the space 100, as viewed in Figure 5, is used in conjunction with the tops of the legs 86 and 90 to gauge the location of a tall stem 22 in the manner described above.

It is noted that the spaces 36 and 38 of the gauge 20, and the corresponding spaces of the gauges 58 and 82, are configured to fit easily about the surrounding structure of the valve 24 and the stem 22 as well as the top nut 56 and upper end of the valve unit 52. Also, while the space 38 of the gauge 20 is sized to accommodate the stem 22, the space 38 is made small to retain the adjacent cardboard portions of the gauge to maintain the rigid nature of the gauge. This premise also applies to the small spaces of the gauges 58 and 82. Other space configurations could be employed for height gauges of this type.

In the past, an installer had to use a ruler to measure the desired height of the stem 22 from the surface 26 of the counter 28. This required a tedious and time consuming process of adjusting the top nut 56 to move the stem height while holding the ruler adjacent the valve 24 or making several adjustments without the ruler on a trial basis and then measuring the trial height after each adjustment until the appropriate height was attained.

By using any of the gauges 20, 58 or 82, the height locating process is simplified and is accomplished in a quick and efficient manner.

## Claims

1. A height gauge (20,58,82) for establishing the desired distance for locating a selected portion (26) of a first object (28) with respect to a selected portion (26) of a second object (24), characterised in that the gauge (20,58,82) comprises:
a body;
a first measuring surface (42) located on the body at a prescribed location;
a second measuring surface (44) located on the body at a prescribed location spaced a prescribed distance from the first measuring surface;
the first measuring surface (42) being located on the body for engagement with the selected portion (26) of the first object (28);
the second measuring surface (44) being positionable at a location which establishes the desired location of the selected portion (22) of the second object (24) when the first measuring surface (42) is in engagement with the selected portion (26) of the first object (28); and
a portion of the body being shaped to allow close positioning of the gauge (20,58,82) about sections of the first object (28) or the second object (24) for accurate distance adjustment of the first and second objects relative to each other.

2. A height gauge according to claim 1 characterised in that the body comprises:
a first leg (30) having a first end and a second end;
a second leg (32) having a first end spaced from and in alignment with the first end of the first leg (30) and a second end spaced from and in alignment with the second end of the first leg (30);
a linking arm (34) integrally joining the second ends of the first and second legs; and
an enclosure (36,38) formed by the first and second legs and the linking arm.

3. A height gauge according to claim 2, characterised in that the enclosure (36,38) is formed by a space (36) between the first and second legs.

4. A height gauge according to claim 3, characterised in that the enclosure (36,38) is further formed by a space (38) formed in the linking arm (34) which is in communication with the space (36) between the first and second legs.

5. A height gauge according to claim 4, characterised in that the space (38) formed in the linking arm (34) is smaller than the space (36) between the first and second legs.

6. A height gauge according to any of claims 1 to 4, characterised in that the first measuring surface (42) is located outside of the shaped portion of the body.

7. A height gauge according to any of claims 1 to 6, characterised in that the second measuring surface (44) is located within the shaped portion of the body.

8. A height gauge according to claim 2, characterised in that the first measuring surface (42) is located at the first end of the first leg (30) outside of the enclosure (36,38) and the second measuring surface (44) is located inside the enclosure (36,38) the prescribed distance from the first measuring surface (42).

9. A height gauge according to any of claims 1 to 8, characterised in that the body is composed of rigid material.

10. A height gauge according to any of claims 2 to 9, characterised in that it comprises:
a third leg (62) formed on the body and having a first end and a second end;
the third leg (62) being spaced from the first and second legs (60,64) with the second leg (64) being between the first and third legs (60,62);
the third leg (62) being formed with a first end in alignment with the first ends of the first and second legs (60,64) and a second end in alignment with the second ends of the first and second legs (60,64);
a second linking arm (68) joining the first ends of the second and third legs; and
a second enclosure (74) formed by the second and third legs and the second linking arm.

11. A height gauge according to claim 10, characterised in that it comprises:
a third measuring surface located at the second end of the third leg; and
a fourth measuring surface (80) located inside the second enclosure a prescribed distance form the third measuring surface.

12. A height gauge according to claim 11, characterised in that the prescribed distance between the third and fourth measuring surfaces is different from the prescribed distance between the first and second measuring surfaces.

13. A height gauge according to any of claims 10 to 12, characterised in that the body is composed of a rigid material.

14. A height gauge according to claim 2, characterised in that it comprises:
a third leg (86) formed on the body and extending in alignment with the first leg (84);
a fourth leg (90) formed on the body and extending in alignment with the second leg (88);
each of the third and fourth legs (86,90) having a first end and a second end;
the second end of the first leg (84) joined with the second end of the third leg (86);
the second end of the second leg (88) joined with the second end of the fourth leg (90); and
the linking arm joining the second ends of the first, second, third and fourth legs.

15. A height gauge according to claim 14, characterised in that it further comprises:
a second enclosure formed by the third and fourth legs (86,90) and the linking arm.

16. A height gauge according to claim 15, characterised in that it further comprises:
a third measuring surface located at the first end of the third leg (86); and
a fourth measuring surface located within the second enclosure a prescribed distance from the third measuring surface.

17. A height gauge according to claim 16, characterised in that the prescribed distance between the third and fourth measuring surfaces is different from the prescribed distance between the first and second measuring surfaces.

18. A height gauge according to any of claims 14 to 17, characterised in that the body is composed of a rigid material.
